# FASCICULE DE BREVET EUROPEEN

(11) **EP 0 608 167 B1**
(45) Date de publication et mention de la délivrance du brevet: **16.07.1997**
(21) Numéro de dépôt: 94400097.5
(22) Date de dépôt: 14.01.1994
(51) Int. Cl.: B05B 15/12

(54) **Installation de peinture**
Farbauftrageinrichtung
Coating installation

(30) Priorité: 18.01.1993 FR 9300410
(43) Date de publication de la demande: 27.07.1994
(73) Titulaire: AIR INDUSTRIE SYSTEMES, F-92400 Courbevoie (FR)
(72) Inventeur: Cordier, André, F-92140 Clamart (FR)
(74) Mandataire: Fournier, Michel

(56) Documents cités:
- DE-A- 3 428 300
- GB-A- 2 120 576
- GB-A- 2 134 406
- GB-A- 2 156 238
- US-A- 4 984 595

## Description

La présente invention concerne une installation de peinture, en particulier une installation pour la peinture des caisses de véhicules automobiles.

Les installations de peinture de type connu, par exemple par le brevet français n°24 56 541 déposé le 17 mai 1979 par la société AIR INDUSTRIE, comprennent une enceinte à l'intérieur de laquelle est disposé un plancher ajouré, des moyens pour faire circuler de l'air du haut vers le bas de l'enceinte, des moyens, tels que des goulottes à débordement se déversant sur des parois de ruisselement, pour faire circuler de l'eau et la mélanger à l'air ayant traversé l'enceinte, et un bac de receuil de l'eau.

L'air sert à entraîner les particules de peintures qui ne se sont pas déposées sur les objets à peindre, et est intimement mélangé à de l'eau dans ce qu'il est convenu d'appeler un laveur. L'eau ainsi chargé est évacuée et entraîne également les déchets qui sont produits dans la cabine, soit par le passage des opérateurs, soit par les opérations périodiques de nettoyage du plancher ajouré et des diverses parois intérieures de la cabine; l'eau polluée est habituellement épurée et le résidu est jeté.

Un but de la présente invention est de récupérer la peinture non utilisée, dans un état de propreté permettant sa réutilisation ultérieure. En effet, on obtiendrait par cette récupération une économie de peinture. En outre, on réduirait ainsi le volume des déchets, ce qui est un grand avantage sur le plan écologique.

Un autre but de l'invention est de réaliser une installation de peinture à l'intérieur de laquelle le bruit est réduit, de manière à assurer le confort des opérateurs.

L'art antérieur peut être défini par le brevet américain n° 4984595 qui décrit une installation de peinture dans laquelle le nettoyage est fait par noyage du plancher avec un liquide nettoyant, après avoir fermé tous les orifices qui permettraient au liquide nettoyant de s'échapper. L'opération de nettoyage est statique et ne réussit qu'en laissant le liquide nettoyant au contact des pièces à nettoyer pendant un certain temps. Pendant la phase de nettoyage, la phase de peinture est arrêtée. Le dispositif décrit dans le brevet américain ne permet pas de récupérer la peinture excédentaire. Le dispositif de l'invention se distingue de cet art antérieur en ce qu'il permet de mettre en oeuvre simultanément les moyens de lavage et les moyens de mélange de la peinture excédentaire avec de l'air, et qu'il permet en outre de récupérer la peinture excédentaire.

L'invention a ainsi pour objet une installation de peinture comprenant une enceinte, un plancher ajouré et un dispositif pour faire circuler de l'air de haut en bas de l'enceinte, caractérisée en ce qu'elle comprend des premiers et des seconds moyens distincts, les premiers moyens permettant le lavage à l'eau de l'intérieur de l'enceinte et du plancher ajouré afin d'y entraîner les déchets solides de peinture, les seconds moyens permettant de mélanger intimement un liquide avec l'air chargé de l'excédent de peinture et d'extraire la peinture excédentaire dudit mélange.

Avantageusement, lesdits premiers moyens comprennent des goulottes à débordement coopérant avec des parois de ruissellement convergentes pour l'eau de lavage, les parois de ruissellement aboutissant à un caniveau de collecte relié à au moins un conduit débouchant hors de l'enceinte.

Selon un mode particulier de réalisation de l'invention, les seconds moyens comprennent des goulottes à débordement coopérant avec des parois de ruissellement pour faire ruisseler un liquide, lesdites parois convergeant et coopérant avec des moyens pour assurer un mélange intime de l'air chargé de la peinture excédentaire avec ledit liquide, ledit mélange étant envoyé à un organe de séparation du liquide et de la peinture.

De préférence, le liquide en sortie de l'organe de filtration est renvoyé au moyen d'une pompe dans les goulottes.

Selon une caractéristique de l'invention, un dispositif anti-bruit est disposé au-dessus des plaques de ruissellement du liquide.

Dans un mode particulier de réalisation, le dispositif anti-bruit est fixé sous l'une des parois de ruissellement de l'eau de lavage, qui est disposée au-dessus des parois de ruissellement du liquide.

De préférence, le dispositif anti-bruit est constitué d'une pluralité de barrettes métalliques disposées sensiblement perpendiculairement à la direction moyenne de l'air arrivant au-dessus des plaques de ruissellement du liquide.

Le liquide est adapté au type de peinture utilisé, de l'eau déminéralisée dans le cas où la peinture est une peinture à l'eau.

L'eau de lavage est de l'eau industrielle.

Dans le cas où la peinture est une peinture à l'eau, le moyen de séparation du liquide et de la peinture est un moyen à ultra-filtration.

L'invention sera bien comprise à la lecture de la description ci-après de divers modes de réalisation de l'invention en référence au dessin annexé dans lequel:
- la figure 1 est une vue schématique en élévation en coupe d'une installation de peinture selon l'invention,
- la figure 2 est une vue schématique d'une partie de la figure 1, selon une variante de réalisation,
- la figure 3 est une vue schématique d'une partie de la figure 1, selon une autre variante de réalisation,
- la figure 4 est une vue schématique en élévation d'une installation de peinture selon un autre mode de réalisation de l'invention.

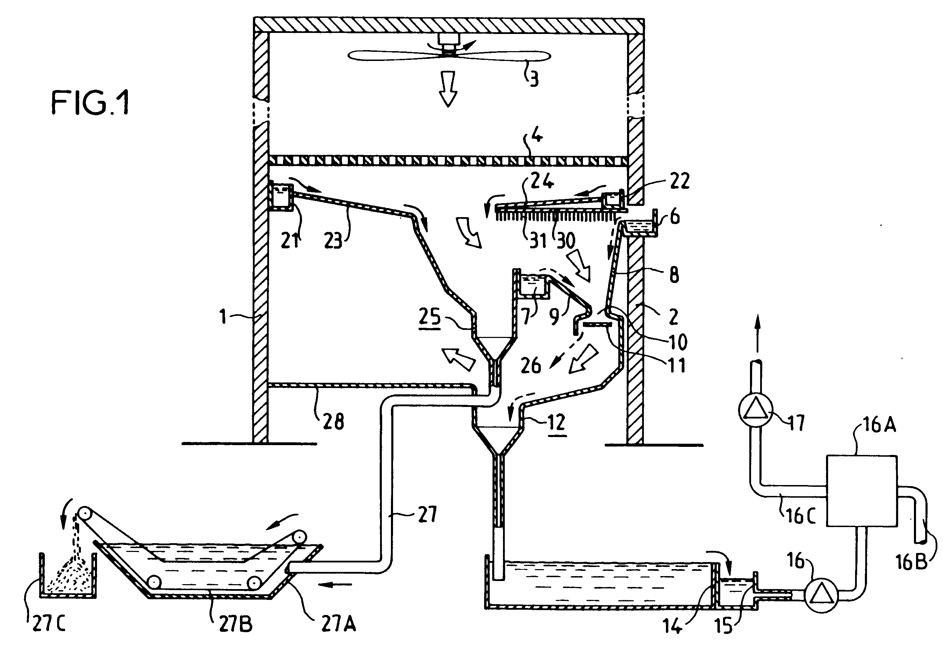

Dans la figure 1, les références 1 et 2 désignent les parois latérales d'une enceinte. A la partie supérieure de l'enceinte sont disposés des moyens de ventilation 3 assurant une circulation d'air du haut vers le bas de l'enceinte. Dans les dessins, la circulation d'air est représenté par des flèches larges et blanches.

L'enceinte comporte un plancher ajouré 4 permettant la circulation des opérateurs dans le cas d'une cabine de peinture manuelle et, dans tous les cas, la circulation des équipes d'entretien et de nettoyage.

Les organes permettant les opérations de peinture (convoyeurs, buses de peinture, etc..,), qui ne font pas partie de l'invention, n'ont pas été représentés.

La cabine comprend les organes classiques assurant l'élimination de l'excédent de peinture. Ces organes sont les suivants:
- deux goulottes à déversoir 6 et 7 véhiculant un liquide qui est adapté au type de peinture utilisé; si celle-ci est de la peinture à l'eau, le liquide est de préférence de l'eau déminéralisée. Dans les figures, le parcours du liquide est représenté par des flèches noires en traits tiretés.
- deux parois de ruissellement 8 et 9, convergentes, pour définir un goulet d'étranglement 10 où l'air chargé de peinture résiduelle se mélange intimement au liquide,
- une paroi transversale 11 assurant un brassage air-liquide pour débarrasser l'air de la peinture qu'il contient. Pour la forme et l'agencement de la paroi, on pourra se référer au brevet français n° 22 22 120 déposé le 20 mars 1973 au nom d'AIR INDUSTRIE.
- un bassin de réception 12 du liquide chargé de peinture.

Selon une des caractéristique de l'invention, le bassin de réception est relié à une ou plusieurs tuyauteries 13 conduisant le liquide à un réservoir principal 14 à déversement; le liquide déborde dans un réservoir secondaire 15 d'où il est extrait par une pompe 16 pour être envoyé à un dispositif 16A de séparation du liquide et de la peinture, adapté au type de peinture utilisée. Dans le cas des peintures à l'eau, le dispositif de séparation est avantageusement un organe d'ultrafiltration. La peinture récupérée est recueillie par une canalisation 16B. Le liquide en sortie 16C de l'organe de filtration, peut avantageusement être réutilisé et, pour ce faire, est renvoyé par une pompe 17 vers les goulottes 6 et 7.

Selon une autre caractéristique de l'invention, la cabine de peinture comprend un deuxième jeu de goulottes à déversement 21 et 22, véhiculant de l'eau de lavage, qui peut être de l'eau industrielle ordinaire. L'eau de lavage est utilisée pour entraîner les déchets résultant du nettoyage périodique de la cabine de peinture. Le trajet de l'eau de lavage est représenté par des flèches noires en traits continus. L'eau de lavage ruisselle sur des parois de ruissellement 23 et 24, qui convergent vers un caniveau de réception 25. Les parois de ruissellement 23 et 24 de l'eau de lavage sont disposées au-dessus des parois de ruissellement 8 et 9 de l'eau déminéralisée et agencées pour laisser un large passage à l'air. L'eau de lavage est recueillie à la base du caniveau de collecte 25 par un collecteur 26 et, de là, est envoyée par des tuyauteries 27 à un bassin de décantation 27A où les déchets solides peuvent être repris par une drague 27B et mis au rebut 27C.

On notera que la paroi 23 définit avec la paroi 1 et une paroi horizontale 28 une gaine latérale d'extraction de l'air.

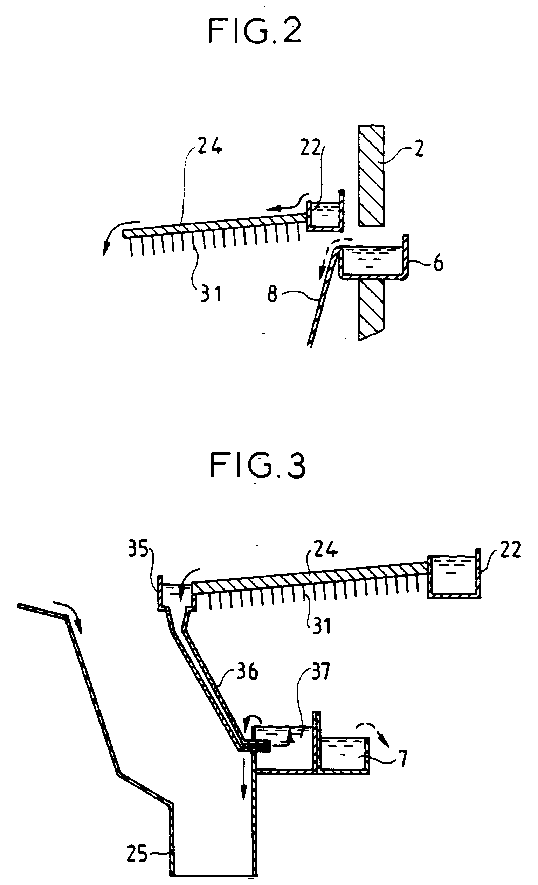

Selon une autre caractéristique de l'invention, une paroi horizontale 30 est disposée au-dessus des parois de ruissellement 8 et 9 de l'eau déminéralisée; cette paroi 30 porte un revêtement anti-bruit 31 constitué préférentiellement par une pluralité de barrettes métalliques disposées perpendiculairement au flux d'air incident, c'est-à-dire pratiquement verticalement; en variante, représenté dans la figure 2, le revêtement anti-bruit est disposé sous la plaque de ruissellement 24 de l'eau de lavage, qui surmonte les plaques 8 et 9.

Ce dispositif anti-bruit permet d'amortir d'au moins 3 décibels, à l'intérieur de la cabine, le bruit dont l'origine principale est constituée par le choc de l'air s'engouffrant dans le goulet constitué par les plaques de ruissellement de l'eau déminéralisée.

Dans la variante représentée dans la figure 3, l'eau de ruissellement de la plaque 24 est recueillie à l'extrémité de cette plaque par une goulotte 35 et acheminée par des tuyaux 36 dans une goulotte à déversement 37 d'où elle passe par débordement dans le caniveau 25. Cette disposition a pour avantage de limiter les risques d'entraînement par le flux d'air d'eau de lavage dans le liquide.

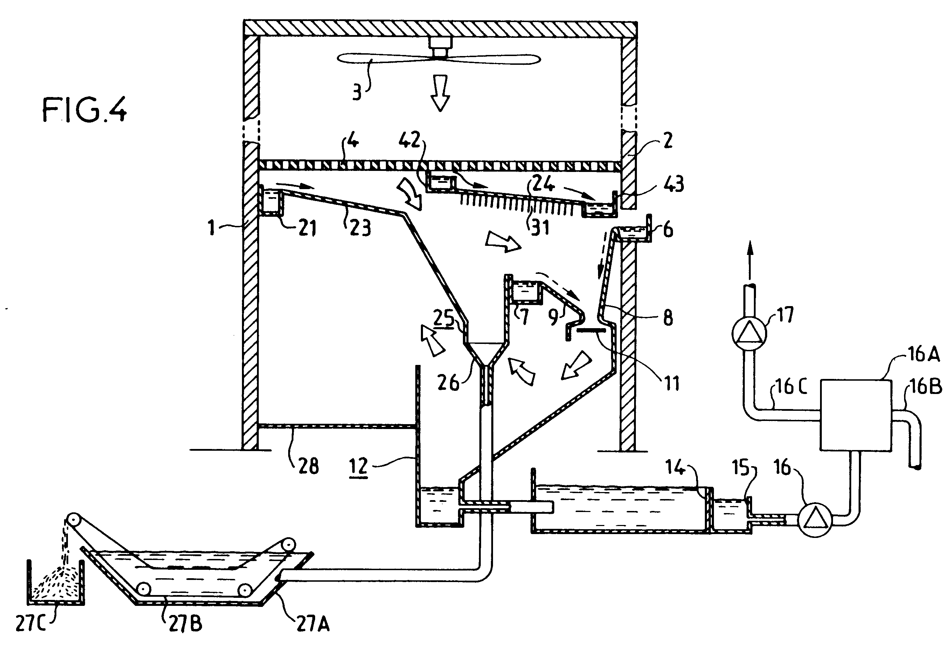

Dans la variante de la figure 4, la plaque de ruissellement 24 de l'eau de lavage est inclinée différemment: sa partie la plus basse est du côté de la paroi 2. L'eau de lavage est amenée par une goulotte à déversement 42 à la partie haute de la plaque 24 et l'eau de ruissellement est recueillie dans un radier 43 d'où elle est acheminée directement vers le bassin de décantation 27A par des moyens non représentés dans le dessin. Cette disposition simplifie la structure et permet notamment de réduire la surface des pièces en contact avec le mélange air peinture.

L'invention s'applique de préférence aux cabines de peinture utilisant de la peinture à l'eau, mais elle peut s'étendre à des cabines utilisant des peintures à solvant.

## Revendications

1. Installation de peinture comprenant une enceinte (1), un plancher ajouré (4) et un dispositif (3) pour faire circuler de l'air de haut en bas de l'enceinte, caractérisée en ce qu'elle comprend des premiers (21, 22, 23, 24, 25) et des seconds moyens (6, 7, 8, 9, 16A) distincts, les premiers moyens permettant le lavage à l'eau de l'intérieur de l'enceinte (1) et du plancher ajouré (4) afin d'y entraîner les déchets solides de peinture, les seconds moyens permettant de mélanger intimement un liquide avec l'air chargé de l'excédent de peinture et d'extraire la peinture excédentaire dudit mélange, les premiers et second moyens pouvant être mis en oeuvre simultanément.

2. Installation selon la revendication 1, caractérisé en ce que lesdits premiers moyens comprennent des goulottes à débordement (21, 22) coopérant avec des parois de ruissellement convergentes (23, 24) pour l'eau de lavage, les parois de ruissellement aboutissant à un caniveau de collecte (25) relié à au moins un conduit (27) débouchant hors de l'enceinte.

3. Installation selon l'une des revendications 1 et 2, caractérisée en ce que les seconds moyens comprennent des goulottes à débordement (6, 7) coopérant avec des parois de ruissellement (8, 9) pour faire ruisseler un liquide, lesdites parois convergeant et coopérant avec des moyens (10) pour assurer un mélange intime de l'air chargé de la peinture excédentaire avec ledit liquide, lesdits seconds moyens comprenant un organe (16A) de séparation du liquide et de la peinture dans lequel est envoyé ledit mélange.

4. Installation selon la revendication 3, caractérisé en ce que le liquide en sortie de l'organe de séparation (16A) est renvoyé au moyen d'une pompe (17) dans les goulottes (6, 7).

5. Installation de peinture selon la revendication 3, caractérisée en ce qu'un dispositif anti-bruit (31) est disposé au-dessus des plaques de ruissellement (7, 8) du liquide.

6. Installation de peinture selon la revendication 5, caractérisée en ce que le dispositif anti-bruit (31) est fixé sous l'une (24) des parois de ruissellement de l'eau de lavage, qui est disposée au-dessus des parois (7, 8) de ruissellement du liquide.

7. Installation de peinture selon l'une des revendications 5 et 6, caractérisée en ce que le dispositif anti-bruit (31) est constitué d'une pluralité de barrettes métalliques(31) disposées sensiblement perpendiculairement à la direction moyenne de l'air arrivant au-dessus des plaques (8, 9) de ruissellement du liquide.

8. Installation de peinture selon l'une des revendications 1 à 7, caractérisée en ce que le liquide est adapté au type de peinture utilisé, soit de l'eau déminéralisée dans le cas où la peinture est une peinture à l'eau.

9. Installation de peinture selon l'une des revendications 1 à 8, caractérisée en ce que l'eau de lavage est de l'eau industrielle.

10. Installation de peinture selon l'une des revendications 1 à 9, caractérisée en ce que, dans le cas où la peinture est une peinture à l'eau, le moyen (16A) de séparation du liquide et de la peinture est un moyen à ultra-filtration.

## Claims

1. A painting installation comprising an enclosure (1), a perforated floor (4), and a device (3) for causing air to flow downwards inside the enclosure, the installation being characterized in that it includes distinct first and second means (21, 22, 23, 24, 25; 6, 7, 8, 9, 16A), the first means enabling the inside of the enclosure (1) and the perforated floor (4) to be washed with water in order to entrain solid particles of paint through the perforated floor, and the second means enabling a liquid to be intimately mixed with the air charged with excess paint, and enabling the excess paint to be extracted from said mixture, which first and second means are capable of being operated simultaneously.

2. An installation according to claim 1, characterized in that said first means comprise overflow chutes (21, 22) co-operating with converging trickle walls (23, 24) for the washing water, the trickle walls terminating in a collecting gutter (25) connected to at least one pipe (27) leading to the outside of the enclosure.

3. An installation according to claim 1 or 2, characterized in that the second means comprise overflow chutes (6, 7) co-operating with trickle walls (8, 9) to cause a liquid to trickle, said walls converging and co-operating with means (10) for intimately mixing said liquid with the air charged with excess paint, the air is allowed to escape from said intimate mixture, leaving a mixture of liquid and excess paint, said second means including a member (16A) for separating the paint from the liquid and into which said mixture is applied.

4. An installation according to claim 3, characterized in that the liquid at the outlet from the separator member (16A) is returned by means of a pump (17) to the chutes (6, 7).

5. A painting installation according to claim 3, characterized in that an antinoise device (31) is disposed between the trickle plates (7, 8) for the liquid.

6. A painting installation according to claim 5, characterized in that the antinoise device (31) is fixed to the underside of one of the washing water trickle walls (24), which is itself disposed above the trickle walls (7, 8) for the liquid.

7. A painting installation according to claim 5 or 6, characterized in that the antinoise deice (31) is constituted by a plurality of metal strips (31) disposed substantially perpendicularly to the mean flow direction of the air arriving over the liquid trickle plates (8, 9).

8. A painting installation according to any one of claims 1 to 7, characterized in that the liquid is adapted to the type of paint used, being demineralized water if the paint is a water-based paint.

9. A painting installation according to any one of claims 1 to 8, characterized in that the washing water is industrial water.

10. A painting installation according to any one of claims 1 to 9, characterized in that when the paint is a water-based paint, the means (16A) for separating the liquid and the paint is constituted by ultrafiltration means.

## Patentansprüche

1. Lackieranlage mit einer Kabine (1), einem gelochten Boden (4) und einer Vorrichtung (3), um Luft im Raum von oben nach unten strömen zu lassen, dadurch gekennzeichnet, daß sie erste (21, 22, 23, 24, 25) und andere zweite Mittel (6, 7, 8, 9, 16A) besitzt, wobei die ersten Mittel das Waschen des Inneren der Kabine (1) und des gelochten Bodens (4) mit Wasser ermöglichen, um darin die festen Farbabfälle mitzunehmen, während die zweiten Mittel es erlauben, eine Flüssigkeit mit der mit dem Farbüberschuß angereicherten Luft eng zu vermischen und die überschüssige Farbe aus dieser Mischung zu entziehen, wobei die ersten und die zweiten Mittel gleichzeitig eingesetzt werden können.

2. Anlage nach Anspruch 1, dadurch gekennzeichnet, daß die ersten Mittel Überlaufrinnen (21, 22) aufweisen, die mit konvergenten Rieselwänden (23, 24) für das Waschwasser zusammenwirken, wobei die Rieselwände in einem SammelSchwemmkanal (25) münden, der mit mindestens einem Kanal (27) verbunden ist, der von der Kabine nach außen führt.

3. Anlage nach einem der Ansprüche 1 und 2, dadurch gekennzeichnet, daß die zweiten Mittel Überlaufrinnen (6, 7) aufweisen, die mit Rieselwänden (8, 9) zusammenwirken, um eine Flüssigkeit rieseln zu lassen, wobei die Wände konvergieren und mit Mitteln (10) zusammenwirken, um eine enge Vermischung der mit der überschüssigen Farbe angereicherten Luft mit dieser Flüssigkeit zu gewährleisten, wobei die zweiten Mittel ein Organ (16A) zur Trennung der Flüssigkeit und der Farbe aufweisen, zu dem die Mischung geschickt wird.

4. Anlage nach Anspruch 3, dadurch gekennzeichnet, daß die Flüssigkeit am Ausgang des Trennorgans (16A) mit einer Pumpe (17) in die Rinnen (6, 7) zurückgepumpt wird.

5. Lackieranlage nach Anspruch 3, dadurch gekennzeichnet, daß eine geräuschdämpfende Vorrichtung (31) oberhalb der Rieselplatten (7, 8) für die Flüssigkeit angeordnet wird.

6. Lackieranlage nach Anspruch 5, dadurch gekennzeichnet, daß die geräuschdämpfende Vorrichtung (31) unter einer der Rieselwände (24) für das Waschwasser angeordnet ist, die sich über den Rieselwänden (6, 7) für die Flüssigkeit befindet.

7. Lackieranlage nach einem der Ansprüche 5 und 6, dadurch gekennzeichnet, daß die geräuschdämpfende Vorrichtung (31) aus einer Vielzahl von Metallstäben (31) besteht, die im wesentlichen senkrecht zur mittleren Richtung der Luftströmung angeordnet sind, die oberhalb der Rieselplatten (8, 9) für die Flüssigkeit ankommt.

8. Lackieranlage nach einem der Ansprüche 1 bis 7, dadurch gekennzeichnet, daß die Flüssigkeit der Art der verwendeten Farbe angepaßt ist, z.B. entmineralisiertes Wasser bei einer wasserlöslichen Farbe.

9. Lackieranlage nach einem der Ansprüche 1 bis 8, dadurch gekennzeichnet, daß das Waschwasser industrielles Wasser ist.

10. Lackieranlage nach einem der Ansprüche 1 bis 9, dadurch gekennzeichnet, daß, wenn die Farbe eine wasserlösliche Farbe ist, das Mittel (16A) zur Trennung der Flüssigkeit und der Farbe ein Mittel mit Ultrafiltrierung ist.
